# EUROPEAN PATENT SPECIFICATION

(11) **EP 4 531 587 B1**
(45) Date of publication and mention of the grant of the patent: **28.10.2026**
(21) Application number: 23731055.2
(22) Date of filing: 23.05.2023
(51) Int. Cl.: A23G 3/44, A23G 3/48, A23G 3/52, A23L 33/18

(54) **EGG-FREE MERINGUE COMPOSITION**
EIFREIE BAISER-ZUSAMMENSETZUNG
COMPOSITION DE MERINGUE SANS OEUF

(30) Priority: 24.05.2022 EP 22175001; 16.09.2022 EP 22196243
(43) Date of publication of application: 09.04.2025
(73) Proprietor: Cargill, Incorporated, Wayzata, Minnesota 55391 (US)
(72) Inventor: BENOIT, Magalie, 1800 Vilvoorde (BE); VAN DER VOORDE, Glen, 1800 Vilvoorde (BE); FISCHER, Thomas, 40468 Düsseldorf (DE)
(74) Representative: Cargill IP Department
(86) International application number: PCT/US2023/023204
(87) International publication number: WO 2023/230040

(56) References cited:
- CN-A- 113 575 738
- US-A- 4 238 519
- US-A1- 2020 305 477
- US-A1- 2021 219 581

## Description

### CROSS-REFERNCE TO RELATED APPLICATIONS

This application claims the benefit of European Application No. 22175001.1, filed May 24, 2022, and European Application No. 22196243.4, filed September 16, 2022.

### BACKGROUND

Meringue is a dessert or candy made mainly from whipped egg whites (albumen) and sugar. As there has been a growing trend in replacing foods produced from animals with plant-based analogues, there is a demand for an egg-free version of meringue in the market.

US 2020/305477 A1 discloses an egg-free albumen replacement composition comprising: a starch; an edible gum; and a hydrolyzed pea protein.

### SUMMARY

The present disclosure provides an egg-free meringue composition that comprises a hydrolyzed pea protein, a carrageenan, at least one sweetening agent (preferably sucrose), water, and optionally a starch. The hydrolyzed pea protein and the carrageenan are present in a ratio of 1:0.5 to 1:2 in the composition.

The present disclosure also provides a meringue-containing food product that comprises an egg-free meringue composition of the present disclosure.

The present disclosure also provides a use of a blend of a hydrolyzed pea protein a carrageenan as an albumen replacement to prepare an egg-free meringue composition.

The present disclosure also provides a method of manufacturing an egg-free meringue. The method comprises the steps of providing a blend of a hydrolyzed pea protein and a carrageenan; optionally pre-mixing the blend with a sweetening agent (preferably sucrose), and/or a starch; mixing the blend with water at a pre-determined temperature to obtain a mixture; adding a sweetening agent (preferably sucrose) to the mixture and mixing the sweetening agent with the mixture to obtain an egg-free meringue composition; optionally depositing the egg-free meringue composition; and drying the egg-free meringue composition to obtain the egg-free meringue.

### DETAILED DESCRIPTION

The present invention is defined by the appended claims.

The present invention discloses an egg-free meringue composition, comprising:
a. a hydrolyzed pea protein;
b. a carrageenan;
c. at least one sweetening agent, preferably sucrose;
d. water; and
e. optionally a starch;

wherein the hydrolyzed pea protein and the carrageenan are present in a ratio of 1 :0.5 to 1:2 in the composition,
wherein the hydrolyzed pea protein has a degree of hydrolysis of at least 20%, preferably at least 25%, preferably at least 28%, or preferably at least or about 30%.

The present invention also discloses a meringue-containing food product comprising the egg-free meringue composition of any of the claims 1-6.

The present invention also discloses the use of a blend of a hydrolyzed pea protein and a carrageenan as an albumen replacement to prepare the egg-free meringue composition of claim 1.

The present invention also discloses a method of manufacturing an egg-free meringue, comprising the steps of:
a. providing a blend of a hydrolyzed pea protein and a carrageenan;
b. optionally pre-mixing the blend with a sweetening agent, preferably sucrose, and/or a starch;
c. mixing the blend with water at a pre-determined temperature to obtain a mixture; d. adding a sweetening agent, preferably sucrose, to the mixture and mixing the sweetening agent with the mixture to obtain an egg-free meringue composition;
e. optionally depositing the egg-free meringue composition; and
f. drying the egg-free meringue composition to obtain the egg-free meringue, wherein the hydrolyzed pea protein and the carrageenan are present in a ratio of 1 : 0.5 to 1 :2 in the blend and
wherein the hydrolyzed pea protein has a degree of hydrolysis of at least 20%, preferably at least 25%, preferably at least 28%, or preferably at least or about 30%.

Reference will now be made in detail to certain aspects of the disclosed subject matter, examples of which are illustrated in part in the accompanying drawings. While the disclosed subject matter will be described in conjunction with the enumerated claims, it will be understood that the exemplified subject matter is not intended to limit the claims to the disclosed subject matter.

Unless defined otherwise, all technical and scientific terms used herein have the same meaning as commonly understood by one skilled in the art to which this invention belongs. As used herein, each of the following terms has the meaning associated with it as defined below.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise.

Unless expressly stated, ppm (parts per million), percentage, and ratios are on a by weight basis. Percentage on a by weight basis is also referred to as wt% below.

All parameter ranges disclosed include the endpoints and all values in between, unless otherwise specified.

When used in this specification and claims, the terms "comprise" and "comprising" and variations thereof mean that the specified features, steps, or integers are included. The terms are not to be interpreted to exclude the presence of other features, steps, or components.

In this document, the terms "a," "an," or "the" are used to include one or more than one unless the context clearly dictates otherwise. The term "or" is used to refer to a nonexclusive "or" unless otherwise indicated.

The term "or" as used herein refers to a nonexclusive "or" unless otherwise indicated. The statement "at least one of A and B" has the same meaning as "A, B, or A and B."

The term "for example," "for instance," "such as," or "including" as used herein is meant to introduce examples that further clarify more general subject matter. Unless otherwise specified, these examples are provided only as an aid for understanding the applications illustrated in the present disclosure and are not meant to be limiting in any fashion.

In the methods described herein, the acts can be carried out in any order without departing from the principles of the disclosure, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The present disclosure provides an egg-free meringue composition that can be obtained by replacing albumen in traditional egg-white meringue with the use of a blend of a hydrolyzed pea protein and a carrageenan.

As used herein, "egg-free", "free of egg", or "free of egg protein" refer to a meringue composition that is substantially free of avian egg or avian egg protein(s), i.e., containing no detectable amounts of avian egg protein.

As used herein, "room temperature" or "RT" refer to a temperature between 20°C to 25°C.

### Pea protein

Pea protein in the present egg-free meringue composition can have a protein content of at least about 80 wt%, 85 wt%, 88 wt%, 90 wt%, 92 wt%, 95 wt%, or 97 wt%. For example, the protein content of the pea protein can be about 80 - 97%, 85 - 95%, or 88 - 92%. The remaining components of the pea protein include, but are not limited to, lipids and/or carbohydrates. In one aspect, the pea protein can have a peptide profile as shown in Table 1.

**Table 1.**

| **Molecular Weight (MW)** | **Distribution (%)** |
|---|---|
| MW > 5000 | 0 |
| 5000 > MW > 3000 | 0 |
| 3000 > MW > 1000 | 7 |
| 1000 > MW > 500 | 25 |
| 500 > MW > 300 | 25 |
| PM < 300 | 43 |

The pea protein in the present egg-free meringue composition has been hydrolyzed at least to some degree. In one aspect, the pea protein is partially or preferably, fully hydrolyzed. The extent to which the pea protein is hydrolyzed can be described by "degree of hydrolysis" or "DH". Technically, DH is defined as the proportion of cleaved peptide bonds in a protein hydrolysate relative to the total amount of peptide bonds in the protein before hydrolysis occurred.

In one aspect, a fully hydrolyzed pea protein has a DH of at least 20%, preferably at least 25%, more preferably at least 28%, and most preferably a DH of at least 30% or of about 30%. The DH can be from 20% to 40%, preferably 25% to 35%, and more preferably 28% to 32%. In one aspect, the DH of a partially hydrolyzed pea protein is at most 10%, alternatively at most 5%, at most 2%, or at most 1.5%. The measurement method for measuring the DH is provided in the example section below.

### Carrageenan

Carrageenan in the present egg-free meringue composition can include different types of carrageenan, namely kappa carrageenan, iota carrageenan, and lambda carrageenan, that vary in sulfation. In one aspect, the carrageenan can have a kappa carrageenan and an iota carrageenan in a ratio of about 1:0.1, 1:0.2, 1:0.3, 1:0.4, 1:0.5, 1:0.6, 1:0.7, 1:0.8, 1:0.9, 1:1, 1:2, 1:3, 1:4, 1:5, 1:6, 1:7, 1:8, 1:9, or 1:10. For example, a ratio of kappa carrageenan and iota carrageenan can be in a range of about 1:0.1 to 1:10, 1:0.2 to 1:9, 1:0.3 to 1:8, 1:0.4 to 1:7, 1:0.8 to 1:7, 1:1 to 1:7, 1:4 to 1:7, 1:7 to 1:10, 1:4 to 1:10, 1:5 to 1:9, or 1:6 to 1: 8.

In one aspect, the carrageenan can have more than one blend, preferably two blends, of carrageenan in the egg-free meringue composition. For example, a ratio of a first blend of carrageenan and a second blend of carrageenan can be about 1:1, 1:1.5, 1:1.7, 1:2, 1:2.2, 1:2.5, 1:2.8, 1:3, 1:3.5, 1:4, 1:4.5, 1:5, or 1:6. The ratio of a first blend of carrageenan and a second blend of carrageenan can also be in a range of 1:1 to 1:6, 1:1 to 1:5, 1:1 to 1:4, 1:1 to 1:3, 1:1 to 1:2.5, 1:1 to 1:2.2, 1:1 to 1:2, 1:1 to 1:1.7, or 1:1 to 1:1.5.

In one aspect, the content of a first blend of carrageenan in the present egg-free meringue composition can be about 0.1 wt%, 0.125 wt%, 0.25 wt%, 0.45 wt%, 0.5 wt%, 0.75 wt%, 1 wt%, 1.25 wt%, or 1.5 wt%. For example, the content of a first blend of carrageenan in the egg-free meringue composition can be in arrange of about 0.1 - 1.5 wt%, 0.125 - 1.25 wt%, 0.125 - 1 wt%, 0.25 - 1 wt%, 0.45 - 1 wt%.

In one aspect, the content of a second blend of carrageenan in the present egg-free meringue composition can be about 0.1 wt%, 0.2 wt%, 0.375 wt%, 0.5 wt%, 0.55 wt%, 0.75 wt%, or 1 wt%. For example, the content of a second blend of carrageenan in the egg-free meringue composition can be in a range of about 0.1 - 1 wt%, 0.1 - 0.75 wt%, 0.1 - 0.5 wt%, or 0.375 - 0.55 wt%.

Carrageenan in the present egg-free meringue composition can include one or more than one blend of carrageenan. In one aspect, different blends of carrageenan can have the same or different concentrations (e.g., wt%) in the egg-free meringue composition. Each blend of carrageenan can have the same or different profiles of kappa carrageenan, iota carrageenan, and lambda carrageenan. Different blends of carrageenan can have the same or different profiles of kappa carrageenan, iota carrageenan, and lambda carrageenan.

In another aspect, there is only one blend of carrageenan present in the egg-free meringue composition and provides same or similar functions and/or properties as those of an egg-free meringue composition having more than one blend of carrageenan.

The ratio of hydrolyzed pea protein and carrageenan present in the present egg-free meringue composition is about 1:0.5, 1:0.6, 1:0.7, 1:0.8, 1:0.9, 1:1, 1:1.1, 1:1.2, 1:1.3, 1:1.4, 1:1.5, 1:1.6, 1:1.7, 1:1.8, 1:1.9, 1:2. For example, the ratio of the hydrolyzed pea protein and the carrageenan present in the composition is in a range of about, 1:0.5 to 1:2, 1:0.5 to 1:1.8, 1:0.5 to 1:1.5, 1:0.5 to 1:1.2, 1:0.5 to 1:1, 1:0.5 to 1:0.7, 1:0.6 to 1:2, 1:0.6 to 1:1.5, 1:0.6 to 1:1, 1:0.7 to 1:2, 1:0.7 to 1:1.7, 1:0.7 to 1:1.5, 1:0.7 to 1:1, 1:1 to 1:2, 1:1 to 1:1.8, 1:1 to 1:1.5, or 1:1 to 1:1.2.

### Compositions

The egg-free meringue composition of the present disclosure also comprises at least one sweetening agent. Sweetening agent may include, but is not limited to, one or more of the following: sugars (e.g., trehalose, glucose, dextrose, fructose, galactose, sucrose, lactose, maltose, palatinose, isomaltulose, cane sugar, beet sugar, rice syrup, invert sugar, honey, agave syrup, maple syrup, high fructose com syrup, combinations thereof, and the like), and/or sugar alternatives such as high intensity sweeteners (e.g., steviol glycosides, mogrosides, sucralose, acesulfame potassium (acesulfame K), aspartame, saccharin or brazzein, combinations thereof, and the like) combined with bulking agents (e.g., resistant dextrin, inulin, or fructooligosaccharides (FOS)), combinations thereof, and the like), and/or polyols/low or no-calorie sweeteners (e.g., isomalt, tagatose, erythritol, maltitol, lactitol, sorbitol, mannitol, allulose, xylitol, hydrogenated starch hydrolysates, combinations thereof, and the like). Preferably the sweetening agent is or comprises sucrose (also referred to herein as "sugar" in the singular and also known as table sugar). More preferably the sweetening agent is sucrose.

In one aspect, the content of the sweetening agent in the egg-free meringue composition is at least about 60 wt%, 65 wt%, 67 wt%, 70 wt%, 75 wt%, or 80 wt%. For example, the egg-free meringue composition can include about 60 - 80 wt%, 65 - 80 wt%, 67 - 80 wt%, or 67 - 75 wt% sweetening agent.

In one aspect, the egg-free meringue composition of the present disclosure comprises water in a concentration of about 20 wt%, 25 wt%, 30 wt%, 31 wt%, 35 wt%, or 40 wt%. For example, the egg-free meringue composition can include about 20 - 40 wt%, 25 - 35 wt%, 20 - 31 wt%, or 31 - 40 wt% water.

In one aspect, the egg-free meringue composition of the present disclosure can also comprise a starch in a concentration of about 0 wt%, 0.5wt%, 1 wt%, 1.5 wt%, 2 wt%, 2.5 wt%, 3 wt%, 3.5 wt%, or 4 wt%. For example, the egg-free meringue composition can include about 0 - 4 wt%, 0.5 - 3.5 wt%, 1 - 3 wt%, 1.5 - 2.5 wt%, 0 - 2 wt%, or 2 - 4 wt% starch.

In one aspect, the egg-free meringue composition of the present disclosure comprises: a hydrolyzed pea protein, a carrageenan, at least one sweetening agent (preferably sucrose), water, and optionally a starch. Table 2 provides a preferred composition of such an egg-free meringue composition.

**Table 2.**

| **Component** | **Concentration (wt%)** |
|---|---|
| Hydrolyzed pea protein | 0.5 - 1.5 |
| Carrageenan | 0.5 - 1.5 |
| Water | 20 - 40 |
| Sweetening agent | 55 - 80 |
| Starch | 0 -4 |

In one aspect, density of the egg-free meringue composition is at least about 0.4 g/L, 0.45 g/L, 0.5 g/L, 0.55 g/L, 0.6 g/L, 0.65 g/L, or 0.7 g/L. For example, the egg-free meringue composition can have a density of about 0.4 - 0.7 g/L, 0.4 - 0.65 g/L, 0.4 - 0.6 g/L, 0.5 - 0.7 g/L, 0.5 - 0.65 g/L, 0.5 - 0.6 g/L, or 0.6 - 0.7 g/L.

In all of the aspects disclosed above, preferably the sweetening agent is or comprises sucrose. More preferably the sweetening agent is sucrose.

### Albumen replacement

A blend of a hydrolyzed pea protein and a carrageenan, in one aspect, can be used to develop an albumen replacement. The blend of hydrolyzed pea protein and carrageenan can then be used to prepare an egg-free meringue composition. For example, a blend of a hydrolyzed pea protein and a carrageenan can be combined with water and a sweetening agent, preferably sucrose, to prepare an egg-free meringue composition.

A ratio of hydrolyzed pea protein and carrageenan in the blend is about 1:0.5, 1:0.6, 1:0.7, 1:0.8, 1:0.9, 1:1, 1:1.1, 1:1.2, 1:1.3, 1:1.4, 1:1.5, 1:1.6, 1:1.7, 1:1.8, 1:1.9, 1:2. For example, the ratio of hydrolyzed pea protein and carrageenan in the blend can be about 1:0.5 to 1:2, 1:0.5 to 1:1.8, 1:0.5 to 1:1.5, 1:0.5 to 1:1.2, 1:0.5 to 1:1, 1:0.5 to 1:0.7, 1:0.6 to 1:2, 1:0.6 to 1:1.5, 1:0.6 to 1:1, 1:0.7 to 1:2, 1:0.7 to 1:1.7, 1:0.7 to 1:1.5, 1:0.7 to 1:1, 1:1 to 1:2, 1:1 to 1:1.8, 1:1 to 1:1.5, or 1:1 to 1:1.2.

### Method of manufacturing an egg-free meringue

In accordance with the present disclosure, a method of manufacturing an egg-free meringue comprises steps of: (a) providing a blend of a hydrolyzed pea protein and a carrageenan; (b) optionally pre-mixing the blend with a sweetening agent, preferably sucrose, and/or a starch; (c) mixing the blend with water at a pre-determined temperature to obtain a mixture; (d) adding a sweetening agent, preferably sucrose, to the mixture and mixing the sweetening agent with the mixture to obtain an egg-free meringue composition; (e) optionally depositing the egg-free meringue composition; and (f) drying the egg-free meringue composition to obtain the egg-free meringue. The method, in one aspect, can have a step of mixing a hydrolyzed pea protein and a carrageenan prior the providing step (step (a)).

The drying step (step (e)) of the method can include drying the egg-free meringue composition in a conventional dryer (e.g., an oven or a drying cabinet,) preferably, at 60°C for 3 hours, and more preferably at 60°C for 6 hours. In one aspect, the composition can be dried in an oven at a temperature of about 40°C, 45°C, 50°C, 55°C, 60°C, or 65°C, and for a period of about 3 hours, 4 hours, 5 hours, 6 hours, 7 hours, or 8 hours. For example, the composition can be dried in an oven at a temperature in a range of about 40°C to 65°C, 40°C to 60°C, 50°C to 65°C, or 50°C to 60°C, for a period of time in a range of about 3 to 8 hours, 3 to 7 hours, 4 to 8 hours, 4 to 7 hours, 5 to 8 hours, 5 to 7 hours, or 6 to 8 hours.

The blend of hydrolyzed pea protein and carrageenan can have a ratio as described above.

In one aspect, the carrageenan in the blend can include different types of carrageenan, namely kappa carrageenan, iota carrageenan, and lambda carrageenan. The carrageenan can have a kappa carrageenan and an iota carrageenan in a ratio as described above.

In one aspect, the carrageenan can include one or more than one blend of carrageenan. Different blends of carrageenan can have the same or different concentrations (e.g., wt%) in the blend of hydrolyzed pea protein and carrageenan. Each blend of carrageenan can have the same or different profiles of kappa carrageenan, iota carrageenan, and lambda carrageenan. Different blends of carrageenan can have the same or different profiles of kappa carrageenan, iota carrageenan, and lambda carrageenan.

In one aspect, the pre-determined temperature of the water added to mix with the blend of hydrolyzed pea protein and carrageenan is about 3°C, 5°C, 8°C, 10°C, 15°C, 18°C, 20°C, 22°C, 25°C, 30°C, 35°C, 40°C, 45°C, or 50°C. For example, the pre-determined temperature can be about 3°C - 50°C, 5°C - 50°C, 10°C - 50°C, 5°C - 30°C, 5°C - 20°C, 5°C - 18°C, 5°C - 15°C, 5°C - 10°C, 15°C - 50°C, 20°C - 50°C, 20°C - 45°C, 20°C - 40°C, 20°C - 35°C, 22°C - 50°C, 22°C - 45°C, 22°C - 40°C, 22°C - 35°C, 25°C - 50°C, 25°C - 45°C, 25°C - 40°C, 25°C - 35°C, or 30°C - 50°C. In one aspect, the pre-determined temperature can be room temperature.

### EXAMPLES

The invention is further described in detail by reference to the following experimental examples. These examples are provided for purposes of illustration only and are not intended to be limiting unless otherwise specified. Thus, the invention should in no way be construed as being limited to the following examples, but rather should be construed to encompass any and all variations which become evident as a result of the teaching provided herein.

In the examples below, only the examples falling within the scope of the claims are considered as part of the present invention.

### Materials and Method

Trials were carried out to study different combinations of ingredients for making egg-free meringue. Tables 3 to 5 show the ingredients and corresponding concentrations used in the trials.

**Table 3.**

| **Ingredient** | **Concentration (wt%)** | | | | **Source** |
|---|---|---|---|---|---|
| | **Trial 1** | **Trial 2** | **Trial 3** | **Trial 4** | |
| Lygomme PM300 | 2 | 2 | 2 | 2 | Cargill Incorporated |
| Water (Temperature) | 31 (6.7°C) | 31 (18.3°C) | 31 (18.3°C) | 31 (60.2°C) | -- |
| Sugar | 67 | 67 | 67 | 67 | SiidZucker |

**Table 4.**

| **Ingredient** | **Concentration (wt%)** | | | | **Source** |
|---|---|---|---|---|---|
| | **Trial 5** | **Trial 6** | **Trial 7** | **Trial 8** | |
| Lygomme PM300 | 2 | 2 | 2 | 2 | Cargill Incorporated |
| C*Tex Instant 12612 | 0 | 0 | 2 | 0 | Cargill Incorporated |
| Water (Temperature) | 31 (40°C) | 31 (40°C) | 31 (40°C) | 31 (60°C) | -- |
| Sugar | 67 | 67 | 65 | 67 | SiidZucker |

**Table 5.**

| **Ingredient** | **Concentration (wt%)** | | **Source** |
|---|---|---|---|
| | **Trial 9** | **Trial 10** | |
| Puris 870H | 1 | 0 | PURIS |
| Radipure E | 0 | 1 | Cargill Incorporated |
| Satiagel PG402 | 0.25 | 0.25 | Cargill Incorporated |
| Satiagel PG302 | 0.75 | 0.75 | Cargill Incorporated |
| Water (Temperature) | 31 (RT) | 31 (RT) | -- |
| Sugar | 67 | 67 | SüdZucker |

First, blends of hydrolyzed pea protein and carrageenan were prepared. In Trials 1 to 8, Lygomme PM300, a blend of 50:50 mix of a fully hydrolyzed pea protein (with a degree of hydrolysis (DH) of about 30%) and a carrageenan (made up of 87.5% of iota carrageenan and 12.5% of kappa carrageenan) was used. In two of these trials, Trials 6 and 8, the blends of hydrolyzed pea protein and carrageenan were pre-mixed with sugar. In Trial 7, the blend of hydrolyzed pea protein and carrageenan was pre-mixed with sugar and starch (C*Tex Instant 12612). In the last two trials, Trials 9 and 10, carrageenan (Satiagel PG402 and Satiagel PG302) were mixed with hydrolyzed pea protein (Puris 870H and Radipure E) according to Table 5 to form the blends of hydrolyzed pea protein and carrageenan. Both Puris 870H and Radipure E are partially hydrolyzed and have DH of less than 10%.

Water at the corresponding temperature (or pre-determined temperature) was then mixed with the blend of hydrolyzed pea protein and carrageenan in a container until no powder was found to stick to the bottom of the container. Sugar was slowly added to a mixture of water and the blend of hydrolyzed pea protein and carrageenan for a maximum of 1.5 minutes to obtain an egg-free meringue composition. The egg-free meringue compositions in all trials were further mixed for another 2 minutes and deposited.

The egg-free meringue compositions were dried according to drying conditions in Table 6 below to obtain the egg-free meringues.

**Table 6.**

| **Trials** | **Drying Temperature (°C)** | **Drying Time (Hour)** |
|---|---|---|
| 1 | 90 | 1 |
| 2 | 90 | 1 |
| 3 | 60 | 7 |
| 4 | 90 | 1 |
| 5 | 60 | 6 |
| 6 | 60 | 6 |
| 7 | 60 | 6 |
| 8 | 60 | 6 |
| 9 | 60 | 7 |
| 10 | 60 | 7 |

The egg-free meringues were evaluated by a sensory panel and densities thereof were measured. For this specific example, the target density was set at 0.4 g/L.

### Results and Discussion

Results of the density measurement and sensory evaluation were shown in Table 7. The results showed that the DH of the pea protein played an important role in the attributes (e.g., appearance, color, texture, density, etc.) of the final egg-free meringue composition.

**Table 7.**

| **Trials** | **Density (g/L)** | **Sensory Panel Comments** |
|---|---|---|
| 1 | 0.57 | More fragile, centre collapsed, lighter product, a bit chewy |
| 2 | 0.61 | A bit more grainy than the starting blend of pea protein and carrageenan |
| 3 | 0.61 | A lot harder, less collapsed, a bit grainy |
| 4 | 0.42 | Very light, fragile, centre collapsed, a little bit chewy |
| 5 | 0.41 | Nice shape (not flat), little holes inside, nice crust, not elastic |
| 6 | 0.35 | Nice shape (not flat), no hole inside, nice crust, not elastic |
| 7 | 0.42 | More dense, more flat, slightly powdery |
| 8 | 0.39 | Lighter, small holes, disappear quicker in the mouth |
| 9 | 1.01 | Product deformed and dark coloured, very sticky |
| 10 | 0.7 | Product deformed and dark coloured, very sticky |

### Measurement of Degree of Hydrolysis (DH)

The DH of a material can be determined by the well-known method, o-phthalic-dialdehyde (OPA) method. The OPA method detects the primary amino groups in the native and modified proteins (e.g., hydrolyzed protein).

An OPA reagent was prepared by first dissolving 40 mg OPA in 1 mL methanol, followed by adding 25 mL of 0.1 M Borax solution. 200 mg of dimethylacetamide (DMAC) and 5 mL of 10% sodium dodecyl sulfate (SDS) solution were then added, and the resulting mixture was mixed and adjusted to 50 mL with Milli-Q water to obtain the OPA reagent.

A solution of 1% dry substance of the intact protein product (i.e., non-hydrolyzed solution, A₀) and a solution of 1% dry substance of the modified protein sample (i.e., hydrolyzed test solution, A) were prepared with Milli-Q water. An array of spectrophotometer cells was prepared as shown in Table 8.

**Table 8.**

| **Cell** | **Content** |
|---|---|
| Cell 1 (A_{zero}) | 3.0 mL Milli-Q water (for zero absorbance) |
| Cell 2 (A_{b}) | 30 µL Milli-Q water + 3.0 mL OPA reagent (blank solution) |
| Cell 3 (A₀) | 30 µL non-hydrolyzed solution + 3.0 mL OPA reagent (non-hydrolyzed protein product) |
| Cell 4 (A) | 30 µL hydrolyzed test solution + 3.0 mL OPA reagent (hydrolyzed protein sample) |

Cells 2, 3, and 4 were prepared in double for obtaining average results. Each cell was covered with a Parafilm and mixed by reversing the cells for three times. After the absorbance readout was stabilized, absorbances of all the cells at a wavelength of 340 nm were measured.

DH of the hydrolyzed protein sample was calculated according to Equation 1: $DH \left(%\right) = \frac{M ∗ \left[\left(A-{A}_{b}\right)-\left({A}_{o}-{A}_{b}\right)\right] ∗ 100}{ε ∗ P}$

In the above Equation 1, A_{b} is the absorbance of Cell 2, A₀ is the absorbance of Cell 3, and A is the absorbance of Cell 4. M is the average molecular weight of amino acids present in pea protein, ε is the specific absorption (6,000 l/mol/cm), and P is the sample concentration in the cell.

Table 9 shows the results of the DH measurement for the pea proteins used in the trials.

**Table 9.**

| **Pea Protein** | **DH (%)** |
|---|---|
| Pea protein in Lygomme PM300 | 30.0 |
| Puris 870H | 1.4 |
| Radipure E | 0.3 |

## Claims

1. An egg-free meringue composition, comprising:
a. a hydrolyzed pea protein;
b. a carrageenan;
c. at least one sweetening agent, preferably sucrose;
d. water; and
e. optionally a starch;
wherein the hydrolyzed pea protein and the carrageenan are present in a ratio of 1:0.5 to 1:2 in the composition,
wherein the hydrolyzed pea protein has a degree of hydrolysis of at least 20%, preferably at least 25%, preferably at least 28%, or preferably at least or about 30%.

2. The egg-free meringue composition of claim 1, wherein the hydrolyzed pea protein and the carrageenan are present in a ratio of 1:0.7 to 1:1.5 in the composition.

3. The egg-free meringue composition of any of the preceding claims, wherein the density of the composition is 0.4 to 0.7 g/L.

4. The egg-free meringue composition of any of the preceding claims, comprising:
a. 0.5 to 1.5 wt% hydrolyzed pea protein;
b. 0.1 to 1.5 wt% carrageenan;
c. 20 to 35 wt% water; and
d. 60 to 80 wt% sweetening agent, preferably sucrose.

5. The egg-free meringue composition of any of the preceding claims, wherein the carrageenan comprises a) one or more than one blend of carrageenan; and/or b) a combination of kappa carrageenan, an iota carrageenan, and/or a lambda carrageenan.

6. The egg-free meringue composition of any of the preceding claims, wherein a ratio of a kappa carrageenan and an iota carrageenan in the carrageenan is in a range of 1:0.1 to 1:10.

7. A meringue-containing food product comprising the egg-free meringue composition of any of the preceding claims.

8. Use of a blend of a hydrolyzed pea protein and a carrageenan as an albumen replacement to prepare the egg-free meringue composition of claim 1.

9. A method of manufacturing an egg-free meringue, comprising the steps of:
a. providing a blend of a hydrolyzed pea protein and a carrageenan;
b. optionally pre-mixing the blend with a sweetening agent, preferably sucrose, and/or a starch;
c. mixing the blend with water at a pre-determined temperature to obtain a mixture;
d. adding a sweetening agent, preferably sucrose, to the mixture and mixing the sweetening agent with the mixture to obtain an egg-free meringue composition;
e. optionally depositing the egg-free meringue composition; and
f. drying the egg-free meringue composition to obtain the egg-free meringue,
wherein the hydrolyzed pea protein and the carrageenan are present in a ratio of 1:0.5 to 1:2 in the blend, and
wherein the hydrolyzed pea protein has a degree of hydrolysis of at least 20%, preferably at least 25%, preferably at least 28%, or preferably at least or about 30%.

10. The method of claim 9, wherein the pre-determined temperature is in a range of 15 to 50°C.

11. The method of any one of claims 9 or 10, wherein the carrageenan comprises a) one or more than one blend of carrageenan; and/or b) a combination of kappa carrageenan, an iota carrageenan, and/or a lambda carrageenan.

12. The method of any one of claims 9 to 11, wherein a ratio of a kappa carrageenan and an iota carrageenan in the blend of hydrolyzed pea protein and carrageenan is in a range of 1:0.1 to 1:10.

## Patentansprüche

1. Eifreie Baiserzusammensetzung, umfassend:
a. ein hydrolysiertes Erbsenprotein;
b. ein Carrageen;
c. mindestens ein Süßungsmittel, vorzugsweise Saccharose;
d. Wasser; und
e. gegebenenfalls eine Stärke;
wobei das hydrolysierte Erbsenprotein und das Carrageen in einem Verhältnis von 1 : 0,5 bis 1 : 2 in der Zusammensetzung vorliegen,
wobei das hydrolysierte Erbsenprotein einen Hydrolysegrad von mindestens 20 %, vorzugsweise mindestens 25 %, vorzugsweise mindestens 28 % oder vorzugsweise mindestens oder etwa 30 % aufweist.

2. Eifreie Baiserzusammensetzung nach Anspruch 1, wobei das hydrolysierte Erbsenprotein und das Carrageen in einem Verhältnis von 1 : 0,7 bis 1 : 1,5 in der Zusammensetzung vorliegen.

3. Eifreie Baiserzusammensetzung nach einem der vorstehenden Ansprüche, wobei die Dichte der Zusammensetzung 0,4 bis 0,7 g/L beträgt.

4. Eifreie Baiserzusammensetzung nach einem der vorstehenden Ansprüche, umfassend:
a. zu 0,5 bis 1,5 Gew.-% hydrolysiertes Erbsenprotein;
b. zu 0,1 bis 1,5 Gew.-% Carrageen;
c. zu 20 bis 35 Gew.-% Wasser; und
d. zu 60 bis 80 Gew.-% Süßungsmittel, vorzugsweise Saccharose.

5. Eifreie Baiserzusammensetzung nach einem der vorstehenden Ansprüche, wobei das Carrageen a) eine oder mehr als eine Mischung von Carrageen; und/oder b) eine Kombination aus Kappa-Carrageen, einem Iota-Carrageen und/oder einem Lambda-Carrageen umfasst.

6. Eifreie Baiserzusammensetzung nach einem der vorstehenden Ansprüche, wobei ein Verhältnis eines Kappa-Carrageens und eines Iota-Carrageens in dem Carrageen in einem Bereich von 1 : 0,1 bis 1 : 10 liegt.

7. Baiser enthaltendes Lebensmittel, umfassend die eifreie Baiserzusammensetzung nach einem der vorstehenden Ansprüche.

8. Verwendung einer Mischung aus einem hydrolysierten Erbsenprotein und einem Carrageen als ein Eiklarersatz, um die eifreie Baiserzusammensetzung nach Anspruch 1 zuzubereiten.

9. Verfahren zum Herstellen eines eifreien Baisers, umfassend die Schritte:
a. Bereitstellen einer Mischung aus einem hydrolysierten Erbsenprotein und einem Carrageen;
b. gegebenenfalls Vormischen der Mischung mit einem Süßungsmittel, vorzugsweise Saccharose, und/oder einer Stärke;
c. Mischen der Mischung mit Wasser bei einer vorbestimmten Temperatur, um ein Gemisch zu erhalten;
d. Zugeben eines Süßungsmittels, vorzugsweise Saccharose, zu dem Gemisch und Mischen des Süßungsmittels mit dem Gemisch, um eine eifreie Baiserzusammensetzung zu erhalten;
e. gegebenenfalls Abscheiden der eifreien Baiserzusammensetzung; und
f. Trocknen der eifreien Baiserzusammensetzung, um den eifreien Baiser zu erhalten,
wobei das hydrolysierte Erbsenprotein und das Carrageen in einem Verhältnis von 1 : 0,5 bis 1 : 2 in der Mischung vorliegen, und
wobei das hydrolysierte Erbsenprotein einen Hydrolysegrad von mindestens 20 %, vorzugsweise mindestens 25 %, vorzugsweise mindestens 28 % oder vorzugsweise mindestens oder etwa 30 % aufweist.

10. Verfahren nach Anspruch 9, wobei die vorbestimmte Temperatur in einem Bereich von 15 bis 50 °C liegt.

11. Verfahren nach einem der Ansprüche 9 oder 10, wobei das Carrageen a) eine oder mehr als eine Mischung von Carrageen; und/oder b) eine Kombination aus Kappa-Carrageen, einem Iota-Carrageen und/oder einem Lambda-Carrageen umfasst.

12. Verfahren nach einem der Ansprüche 9 bis 11, wobei ein Verhältnis eines Kappa-Carrageens und eines Iota-Carrageens in der Mischung aus hydrolysiertem Erbsenprotein und Carrageen in einem Bereich von 1 : 0,1 bis 1 : 10 liegt.

## Revendications

1. Composition de meringue sans œufs, comprenant :
a. une protéine de pois hydrolysée ;
b. un carraghénane ;
c. au moins un agent édulcorant, de préférence du saccharose ;
d. de l'eau ; et
e. facultativement un amidon ;
dans laquelle la protéine de pois hydrolysée et le carraghénane sont présents dans un rapport de 1:0,5 à 1:2 dans la composition,
dans laquelle la protéine de pois hydrolysée a un degré d'hydrolyse d'au moins 20 %, de préférence au moins 25 %, de préférence au moins 28 %, ou de préférence au moins ou environ 30 %.

2. Composition de meringue sans œufs selon la revendication 1, dans laquelle la protéine de pois hydrolysée et le carraghénane sont présents dans un rapport de 1:0,7 à 1:1,5 dans la composition.

3. Composition de meringue sans œufs selon l'une quelconque des revendications précédentes, dans laquelle la masse volumique de la composition va de 0,4 à 0,7 g/L.

4. Composition de meringue sans œufs selon l'une quelconque des revendications précédentes, comprenant :
a. 0,5 à 1,5 % en poids de protéine de pois hydrolysée ;
b. 0,1 à 1,5 % en poids de carraghénane ;
c. 20 à 35 % en poids d'eau ; et
d. 60 à 80 % en poids d'agent édulcorant, de préférence du saccharose.

5. Composition de meringue sans œufs selon l'une quelconque des revendications précédentes, dans laquelle le carraghénane comprend a) une ou plus d'une combinaison de carraghénane ; et/ou b) une combinaison de kappa-carraghénane, d'un iota-carraghénane, et/ou d'un lambda-carraghénane.

6. Composition de meringue sans œufs selon l'une quelconque des revendications précédentes, dans laquelle un rapport d'un kappa-carraghénane et d'un iota-carraghénane dans le carraghénane est dans une plage de 1:0,1 à 1:10.

7. Produit alimentaire contenant de la meringue comprenant la composition de meringue sans œufs selon l'une quelconque des revendications précédentes.

8. Utilisation d'une combinaison d'une protéine de pois hydrolysée et d'un carraghénane en tant que substitut d'albumine pour préparer la composition de meringue sans œufs selon la revendication 1.

9. Procédé de fabrication d'une meringue sans œufs, comprenant les étapes consistant à :
a. fournir une combinaison d'une protéine de pois hydrolysée et d'un carraghénane ;
b. facultativement prémélanger la combinaison avec un agent édulcorant, de préférence du saccharose, et/ou un amidon ;
c. mélanger la combinaison avec de l'eau à une température prédéterminée pour obtenir un mélange ;
d. ajouter un agent édulcorant, de préférence du saccharose, au mélange et mélanger l'agent édulcorant avec le mélange pour obtenir une composition de meringue sans œufs ;
e. facultativement déposer la composition de meringue sans œufs ; et
f. sécher la composition de meringue sans œufs pour obtenir la meringue sans œufs,
dans lequel la protéine de pois hydrolysée et le carraghénane sont présents dans un rapport de 1:0,5 à 1:2 dans la combinaison, et
dans lequel la protéine de pois hydrolysée a un degré d'hydrolyse d'au moins 20 %, de préférence au moins 25 %, de préférence au moins 28 %, ou de préférence au moins ou environ 30 %.

10. Procédé selon la revendication 9, dans lequel la température prédéterminée est dans une plage de 15 à 50 °C.

11. Procédé selon l'une quelconque des revendications 9 ou 10, dans lequel le carraghénane comprend a) une ou plus d'une combinaison de carraghénane ; et/ou b) une combinaison de kappa-carraghénane, d'un iota-carraghénane, et/ou d'un lambda-carraghénane.

12. Procédé selon l'une quelconque des revendications 9 à 11, dans lequel un rapport d'un kappa-carraghénane et d'un iota-carraghénane dans la combinaison de protéine de pois hydrolysée et de carraghénane est dans une plage de 1:0,1 à 1:10.
